# EUROPÄISCHE PATENTANMELDUNG

(11) **EP 4 841 449 A1**
(43) Veröffentlichungstag der Anmeldung: **18.11.2026**
(21) Anmeldenummer: 25175696.1
(22) Anmeldetag: 12.05.2025
(51) Int. Cl.: G06F 11/34

(54) **KOMMUNIKATIONSVORRICHTUNG MIT ANALYSESYSTEM UND VERFAHREN ZUR NACHVERFOLGUNG DER NUTZER-EINGABEN EINER KOMMUNIKATIONSVORRICHTUNG**

(71) Anmelder: Siemens Aktiengesellschaft, 80333 München (DE)
(72) Erfinder: Aigner, Tobias, 81543 München (DE); Kramer, Martin, 82131 Gauting (DE)
(74) Vertreter: Siemens Patent Attorneys

(57) **Zusammenfassung**

Die Erfindung betrifft eine, ein Back-End und ein Front-End mit Ein- und Ausgabevorrichtung umfassende, rechnergestützte Kommunikationsvorrichtung, die über ein neuartiges Analysesystem verfügt sowie Verfahren zum Betreiben einer Kommunikationsvorrichtung dazu. Durch die vorliegende Erfindung wird erstmals eine Technik bereitgestellt, mit der zusätzliche Daten erzeugt werden, die kontextuelle Informationen darüber teilen, was dem Benutzer sichtbar ist und dies in Bezug auf die Umgebung, in der das Produkt oder der Dienst läuft, setzen. Vor allem die Korrelation in Echtzeit macht hier den Unterschied im Hinblick auf ein Feedback, das über eine entsprechende Feedback-Komponente aufbereitet und dem Nutzer bereitgestellt wird.

## Beschreibung

Die Erfindung betrifft eine, ein Back-End und ein Front-End mit Ein- und Ausgabevorrichtung umfassende, rechnergestützte Kommunikationsvorrichtung, die über ein neuartiges Analysesystem verfügt sowie Verfahren zum Betreiben einer Kommunikationsvorrichtung dazu.

Die Erfassung der Nutzer-Aktivitäten einer, ein Back-End mit einer Al umfassenden, Kommunikationsvorrichtung ist grundsätzlich wichtig, weil damit das Ausmaß an Bedienfreundlichkeit, aber auch Fehlerquellen des Systems zu identifizieren sind und/oder die Bedienbarkeit sinnvoll weiterentwickelt wird. Ziel ist beispielsweise, die Bedienfreundlichkeit zu steigern, weil das zur Erhöhung der Produkt-Attraktivität der entsprechend verbesserten Kommunikationsvorrichtung führt. Andererseits kann das Sicherstellen von Fehlerfreiheit und/oder die Optimierung der Nutzerwahrnehmung durch Untersuchung der Design Varianten sein. Dabei wird insbesondere darauf abgezielt, dass der Nutzer die grundsätzlichen Fragestellungen, Eingabefelder und/oder das komplette Nutzer-Interface-Angebot einer Nutzer-Oberfläche HMI und/oder GUI erkennt und so weit wie möglich intuitiv nutzt. Das wirtschaftliche Ziel dahinter ist Produkt-Attraktivität, Produktivität und höherer Durchsatz, sowie Wertversprechen und damit mehr Einnahmen.

Es gibt bereits Schaltflächen und HMIs, die geeignet sind, vom Nutzer Feedback zu erhalten, dies ist jedoch in der Regel auf ein Textfeld und Emojis beschränkt und dabei kommen nur grundlegende Emotionen als Feedback zum Ausdruck.

Probleme gibt es, weil ein Software-Entwickler sich nicht leicht in die Schwierigkeiten hineindenken kann, die ein Nutzer hat. Zudem kommt, dass jeder Nutzer aufgrund seines individuellen technischen Hintergrunds andere Schwierigkeiten mit einer Kommunikationsvorrichtung haben wird. Als technischer Hintergrund wird die Leichtigkeit bezeichnet, mit der sich der Nutzer zur Bedienung neuer Geräte ertüchtigt.

Andererseits ist es klar, dass eine Verringerung oder gar Vermeidung der technischen Hürden bei der Eingabe nutzerseitig viel Zeit, Energie und Leerlauf spart, Fehlerquellen ausräumt und/oder die Wirtschaftlichkeit und Effizienz der Kommunikationsvorrichtung und damit des gesamten Systems steigert.

Daher ist es Aufgabe der vorliegenden Erfindung, eine Kommunikationsvorrichtung mit einem Analysesystem zu schaffen, das die Fehler und Falscheingaben erkennt und dem Nutzer und/oder dem System Rückmeldung darüber gibt. Vor allem ist es Aufgabe der vorliegenden Erfindung hier eine möglichst individuelle und mit kundenspezifisch zugeschnittenem HMI ausgestattete rechnergestützte Kommunikationsvorrichtung zu schaffen.

### Zusammenfassung der Erfindung

Diese Aufgabe wird durch den Gegenstand der vorliegenden Erfindung, wie er in den Ansprüchen, der Beschreibung und den Figuren offenbart ist, gelöst.

Gegenstand der vorliegenden Erfindung ist dementsprechend eine rechnergestützte Kommunikationsvorrichtung, mit einem Back-End und einem Front-End, wobei das Back-End an zumindest eine Rechnereinheit mit einer Künstlichen Intelligenz (Kl) angeschlossen ist und das Front-End zumindest eine Benutzeroberfläche (HMI) mit Anzeige und Bedienvorrichtung für Eingaben durch den Nutzer und Ausgaben durch die Kommunikationsvorrichtung umfasst, wobei ein Analysesystem vorgesehen ist, das Informationen sammelt und speichert und diese mittels einer lokal implementierten Künstlichen Intelligenz analysiert und mittels Kl-Modellen dem Nutzer und/oder einem nachgelagerten System ein Feedback gibt.

Außerdem ist Gegenstand der vorliegenden Erfindung ein Verfahren zur Analyse von Nutzerverhalten am Front-End einer HMI, folgende Prozessschritte umfassend
- Erfassen der vom Nutzer auszuführenden Aufgabe, wobei insbesondere beispielsweise Informationen über Nutzer Aktivitäten, wie Klicks, Ul-Aktivierungen und/oder Eingaben erfasst werden und/oder die zu erledigende "task" also Aufgabe damit abgeglichen wird,
- Sammeln und/oder Erzeugen von Informationen über das Nutzerverhalten am HMI, Erzeugen von rechnergestützt bearbeitbaren Daten und Verarbeitung dieser Daten durch eine lokal implementierte Künstliche Intelligenz (Kl),
- Berechnung einer Analyse als Auslegung der Information durch die Kl-Modelle,
- darauffolgende Ausgabe eines Feedbacks als Ergebnis der Analyse und Verarbeitung der Information durch die lokal implementierte Kl.

"Rechnergestützt" oder "computerimplementiert" ist eine Vorrichtung, wenn diese mindestens einen Computer oder Prozessor aufweist, oder ein Verfahren, wenn mindestens eine Computer oder Prozessor mindestens einen Verfahrensschritt des Verfahrens ausführt.

"Erkennbar" im hier gebrauchten Sinne ist beispielsweise lesbar, hörbar, fühlbar und/oder sichtbar. Beispielsweise ist damit das "Wahrnehmbare" bezeichnet, was mit menschlichen Sinnen und/oder diesen technisch nachempfundenen technischen Implementierungen beschrieben wird. Das Erkennbar bezieht sich hier auf das, was der Nutzer als den Output der Kommunikationsvorrichtung "erkennt".

Hier liegt auch die Aufgabenstellung der Erfindung, weil die Erkennbarkeit des Outputs der Kommunikationsvorrichtung durch die vorliegende Erfindung bewertet und analysiert wird, insbesondere auf den einzelnen individuellen Nutzer bezogen. Dabei wirkt die Erfindung zum einen kundenorientiert, individuell und Nutzer-spezifisch und zum anderen wirkt die Erfindung als Entwicklungswerkzeug, weil durch die Analyseergebnisse der Bedienaktivitäten wertvolle Hinweise auf eine mögliche Weiterentwicklung der Bedienvorrichtung und/oder des HMI zugänglich sind.

"Information", wie sie nach dem oben beschriebenen Verfahren gesammelt und/oder erzeugt wird, ist beispielsweise über Bildschirmaufnahmen respektive "Screenshots" des HMI zugänglich, und/oder durch Ton- und/oder Bildaufnahme, sowohl des Nutzers als auch des HMI. Information wird beispielsweise auch durch Nachverfolgung "Tracking" und/oder Speicherung der Nutzer-Eingaben erzeugt. Die Informationen umfassen beispielsweise auch Nutzer-spezifische Angaben und System-Einstellungen wie Zoom-Level, Spracheinstellung, kulturelle Einstellungen, aber auch personenbezogene und typische individuelle Arbeitsmethoden, bevorzugte Anordnungen auf dem Bildschirm, bis hin zu psychologischen Informationen, Schnelligkeit und Druck des Anschlags auf die Tastatur, Häufigkeit der Überarbeitung von Eingaben, die Rückschlüsse auf das Denkmuster des Nutzers zulassen. Beispielsweise können über entsprechende Sensoren und/oder Kamera-Video-Aufnahmen auch Informationen über die Erfassung der Mimik, Gestik, sowohl im Mikro- als auch im Makro-Bereich gesammelt werden. Wichtig ist dabei, dass das Sammeln dieser Informationen wählbar ist und individuell auf den Nutzer zugeschnitten und einzeln zugelassen oder nicht zugelassen wird. Zudem kann die Konnotation -positiv-negativ- der gewählten Formulierungen, sowie die Problem- und/oder Lösungsorientierung von Aussagen, Klarheit der Eingaben, die über Komplexität, Klarheit, Verwirrung der Gedankenstränge des Nutzers Auskunft gibt, eine Möglichkeit Information über die Bedienfreundlichkeit des individuellen Clients zu sammeln und daraus Kl-verarbeitbare Datensätze zu erzeugen.

Information in Datenformat wird nach dem Verfahren durch lokal implementierte KI verarbeitet, also ausgelesen, zwischengespeichert, analysiert und ein Feedback erarbeitet. Beispielsweise wird auch - je nach Zulassung - Information - gegebenenfalls lokal und/oder remote überarbeitet und/oder anonymisiert und/oder pseudoymisiert - an zentrale Server und/oder Clouds weitergeleitet.

Der Begriff "Front-End" bezieht sich auf den Teil einer Kommunikationsvorrichtung, der für die direkte Interaktion mit dem Benutzer verantwortlich ist.

Genauer gesagt umfasst das Front-End:
- Zumindest eine so genannte "Human Machine Interface (HMI), wie beispielsweise eine grafische Benutzeroberfläche (GUI), mit Anzeige- und Bedienvorrichtungen wie beispielsweise:
   Monitor, Tablet, Display mit oder ohne Touchscreen-Funktionalität, zumindest bereichsweise, Mikrofon, Lautsprecher, Kamera und/oder eine Anzeigevorrichtung wie z.B. Monitor und/oder Display mit einem oder mehreren Fenster, Menüs, Formular-Eingabe-Masken, sichtbaren oder nicht sichtbaren Eingabe-Feldern, Gestaltung und/oder Layout der Oberfläche mit visuellen Elementen wie Avatar, letzterer sowohl als Profilbild als auch als virtueller Assistent denkbar.
- Präsentation von Inhalten und Daten,
- Rendern und Darstellen von Texten, Bildern, Grafiken, Multimedia-Elementen.
- Formatierung und Aufbereitung der Inhalte
- Nutzer-seitige Logik und/oder Funktionalität:
- Umsetzung von Geschäftslogik und Anwendungsfunktionen im Browser.
- Interaktionen mit dem Back-End über APIs.

Zur Weiterentwicklung und/oder zur kundenspezifischen Ausrichtung eines GUl ist es insbesondere wichtig, ein genaues Verständnis der tatsächlichen Nutzung der GUls der Produkte und Dienstleistungen zu erhalten. Während der Betriebsphase der Software und/oder Hardware einer Kommunikationsvorrichtung treten wiederholt Bedingungen auf, die zu einer suboptimalen Bedienbarkeit eines GUI führen. Es besteht der Bedarf, diese Bedingungen so abzuändern, dass der Nutzer eine verbesserte Bedienbarkeit erfährt, zum einen individuell auf die Fähigkeiten des speziellen Nutzers zugeschnitten, zum anderen, um generelle Stolpersteine aus dem Weg zu räumen.

Informationen über die Bedienfreundlichkeit eines GUI umfassen beispielsweise Kriterien wie
- Kenntlichkeit von unsichtbaren Eingabefeldern
- Kontrastverhältnisse am Bildschirm
- Abstände der Eingabefelder
- Layoutstrukturen
- Zu viele/zu wenige oder unpassende Farben
- Untypische Systembenutzereinstellungen (Sprache/Kultur/Tastaturen/Farben)

Technische Fehler, die zu Auswirkungen wie z.B.
- Programmierfehler
- Logische Fehler
- Änderungen in Abhängigkeiten
- Fehlkonfiguration des Systems
führen.

Das Bewerten dieser Kriterien und das Schließen von Lücken in getesteten Systemen mit GUls von Kommunikationsvorrichtungen ist Ziel der Erfindung und bisher schwierig, da Kommunikationsvorrichtungen in der Regel remote, also zentral und nicht lokal beim Client ausgeführt werden, wobei Auswirkungen am Front-End, insbesondere am GUI oft still akzeptiert werden, ohne dem Anbieter der Kommunikationsvorrichtung Feedback oder Korrekturmöglichkeiten zu geben. Um Verbesserungen an GUls zu ermöglichen, ist es wichtig, dass Fehler im GUI identifiziert, erfasst und gemeldet werden, damit der Anbieter reagieren kann.

Ziel der Erfindung ist es, dem Nutzer ein individuelles und personalisiertes Feedback zu geben, das ihm hilft, die Aufgabe schneller zu lösen und die Möglichkeiten des Systems besser zu nutzen und dem Anbieter hilft, die GUls weiterzuentwickeln.

Bisher werden Nutzer-Eingaben über GUls zwar bereits analysiert und nachverfolgt, allerdings immer nur mit beschränktem Zugang zu dem gesamten Bild und/oder Informationen am Client. Beispielsweise wertet Google oder Adobe bereits die allgemeinen Nutzer-Daten aus, allerdings kann das wegen der Privatsphäre natürlich nicht personalisiert erfolgen. Beispielsweise gibt es erhebliche Unterschiede im Nutzerverhalten zwischen kulturellen oder soziologisch als "einheitlich" erfassten Gruppen, die über öffentlich zugängliche Daten wie Nationalität, Ausbildung, Familienstand eingeordnet werden. Abgesehen davon gibt es zwar Verfahren zur Nachverfolgung der Telemetriedaten und auch Fehlerprotokolle, die sogar kundenspezifisch ausgelesen werden können, aber auch hier sind die Methoden immer noch sehr beschränkt.

Hinzu kommt, dass die Telemetriedaten Einblicke in die Privatsphäre des Nutzers ermöglichen, die dieser aber eventuell nicht zulässt.

Die Testung auf Fehler im GUI wird beispielsweise über automatisiertes Testen mit Frameworks durchgeführt, wodurch Daten zu Störstellen, Fehlern in Programmabläufen erkannt werden können. Diese werden in der Regel zentral initiiert, nur am Client getestet und dann wieder zentral ausgewertet.

Es ist daher ein besonderer Aspekt der vorliegenden Erfindung, ein Analysesystem für eine Kommunikationsvorrichtung zur Verfügung zu stellen, das einen Überblick über die Gesamtsituation der Bedienung eines GUI-Nutzerseitig zur Verfügung stellt und trotzdem die Privatsphäre des Nutzers optimal schützt.

Für eine Benutzereingabe "Input" der Kommunikationsvorrichtung und/oder Interaktion mit dem Benutzer ist eine Bedienung und/oder die Erfassung von Benutzereingaben am Front-End über ein entsprechendes Eingabegerät über Berühren mit Finger, Stift oder Hand, wie bei Touchscreen und/oder über Tastatur, Mikrophon und/oder Maus und/oder simples Erscheinen im Erfassungs-Feld, beispielsweise im Sichtfeld einer Kamera des Front-Ends, möglich.

Weitere Arten der Bedienung und/oder Verarbeitung von Nutzerinteraktionen am Front-End sind z.B. Klicks, Scrolls, Eingaben und/oder geeignete Transformation und/oder Weiterleitung von sensorisch erfassten Daten.

Das Front-End bildet also die Schnittstelle zwischen Mensch und Maschine und ist für die visuelle Darstellung und Bedienbarkeit einer Anwendung verantwortlich. Es wird üblicherweise mit Technologien wie HTML, CSS und JavaScript umgesetzt.

Der Begriff "Back-End" bezeichnet den Teil einer Kommunikationsvorrichtung, der sich hinter der Benutzeroberfläche befindet und für die serverseitige Logik und Funktionalität zuständig ist. Das Back-End umfasst typischerweise folgende Komponenten:
- Server-Infrastruktur:
- Webserver, Applikationsserver, Datenbankserver
- Betriebssysteme, virtuelle Maschinen, Container
- Serverbasierte Anwendungslogik:
- Geschäftslogik und Berechnungen
- Datenverwaltung und -verarbeitung
- Datenhaltung:
- Datenbanken (SQL, NoSQL)
- Dateisysteme und Speicherlösungen
- Schnittstellen und APIs:
- Bereitstellung von Programmierschnittstellen
- Kommunikation mit dem Front-End
- Systemintegration:
- Anbindung externer Systeme und Dienste
- Datenflüsse und Synchronisation
- Sicherheit und Verwaltung:
- Authentifizierung, Autorisierung, Zugriffssteuerung
- Monitoring, Logging, Backup-Systeme

Das Back-End ist also für die serverseitige Funktionalität, Datenverarbeitung und Systemintegration verantwortlich. Es bildet das "Rückgrat" einer Anwendung und wird üblicherweise mit Technologien wie Java, .NET, PHP, Python, Node.js umgesetzt.

Die "Front-End" und "Back-End" Trennung ist insbesondere eine logische Trennung. Beispielsweise ist es möglich, dass beide im Rahmen einer Ausführungsform auf dem Client zu vorgesehen sind.

Als "lokal implementierte künstliche Intelligenz" werden insbesondere lokale Kl-Modelle und/oder Geräte mit Prozessoren, die konfiguriert sind und/oder Frameworks haben, die geeignet sind, um "federated learning" auszuführen. Ein lokales Kl-Modell ist beispielsweise ein KI-Modell, das auf dem Endgerät selbst trainiert und ausgeführt wird, ohne dass Daten an externe Server übertragen werden.

Die Übertragung von Daten an zentral zugängliche Server und/oder Clouds ist dabei besonders kritisch, weil diese Rückschlüsse auf personenbezogene Daten zulassen. Dies zu vermeiden und trotzdem personenbezogene Einstellungen, Unterstützung und Feedback für die Weiterentwicklung der Kommunikationsvorrichtung zu generieren ist ein wesentlicher Aspekt der vorliegenden Erfindung.

Als "Client" wird vorliegend ein System oder eine Anwendung, die Dienste oder Ressourcen von einem anderen System, dem "Server" anfordert und nutzt, bezeichnet.

Zentrale Merkmale des Client-Konzepts sind beispielsweise, dass über den Client eine Anfrage an den Server gelangt und der Server Dienste oder Antworten bereitstellt, die der Client dem Nutzer über GUls anbietet. Typische Clients sind beispielsweise Webbrowser, die Webseiten von Webservern abrufen oder mobile Apps, die Dienste von Cloud-Servern nutzen.

Es ist ein besonderer Aspekt der vorliegenden Erfindung, dass hier erstmals Kl-Modelle, insbesondere Kl-Sprachmodelle zur Optimierung des HMI am Client laufen, wobei insbesondere auch die Möglichkeit von GPU-Beschleunigung in Browser-basierten Anwendungen genutzt werden kann. Beispielsweise liegt der Vorteil darin, dass erstens die Persönlichkeitsrechte der Privatsphäre des Nutzers komplett geschont bleiben und zweitens trotzdem Verbesserungen im Rahmen eines Feedback erarbeitet werden, die entweder lokal am Client oder zentral über einen Server umgesetzt werden, wobei der Nutzer am Client immer die volle Hoheit darüber hat, welche Daten in welchem Grad der Anonymisierung vom lokalen Client aus an einen zentralen Server oder eine Cloud weitergeleitet werden.

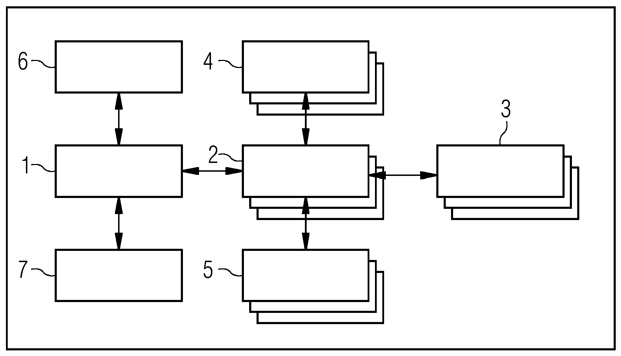

Das Analysesystem der Kommunikationsvorrichtung, wie schematisch in Figur 1 wiedergegeben, hat als Kernstück die Analytik-Komponente 1. Die Analytik-Komponente 1 koordiniert alle anderen Komponenten und ist wie in dieser schematisch gezeigten Ausführungsform der Erfindung mit folgenden weiteren Komponenten 2 bis 7 verbunden: Mit einer oder mehreren Aufgaben-Komponente(n) 2, dort ist definiert, für welche Aufgabe überhaupt die Kommunikationsvorrichtung gestartet wurde und die Nutzereingabe ursprünglich gemacht wurde. Vor dem Hintergrund, dass die Aufgabe erfolgreich erledigt werden soll, erfolgt auch die Analyse der erfassten Daten und darauf abzielend wird gegebenenfalls auch das Feedback durch die Ausgabevorrichtung am Front-End der Kommunikationsvorrichtung ausgegeben.

Die Aufgaben-Komponente 2 nutzt die Peripheral-Komponente 5 beispielsweise, um zusätzliche Informationen von extern abzurufen, die Aktivierung der Peripheral-Komponente 5 kann beispielsweise erst dann erfolgen, wenn der Nutzer seine Erlaubnis gegeben hat. Die Daten von extern werden dann auch über die Prompt-Komponente 4 und die Kl-Modell-Komponente 3 analysiert.

Des Weiteren ist die Analytik-Komponente 1 über Aufgaben-Komponenten 2 mit zumindest einer von mehreren lokal verfügbaren Kl-Modell-Komponenten 3 verbunden, über die die Kl-Bearbeitung zur Analyse der Daten laufen. Diese Kl-Modell-Komponenten 3 sind lokal am Client implementiert. Die eine oder mehrere Aufgaben-Komponenten 2 bedienen sich beispielsweise auch einer oder mehrerer Peripheral Komponente(n) 5 zur Lösung der Aufgabe(n). Die Peripheral-Komponente(n) 5 kann verwendet werden, um Informationen über die Kommunikationsvorrichtung abzurufen.

Der Nutzer wird um Erlaubnis gefragt, ob die Nutzung der externen Quellen gestattet ist. Die Peripheral Komponente(n) 5 wird von der Aufgaben-Komponente 2 gestartet und die Aufgaben-Komponente 2 kann auch von der Peripheral-Komponente 5 bereitgestellte Daten auslesen. Die Aufgaben-Komponente 2 ist andererseits mit der Prompt-Komponente 4 verbunden, die beispielsweise durch die Aufgaben-Komponente 2 initiiert wird. Die Analytik-Komponente 1 verarbeitet die Ergebnisse aus der lokalen Kl-Bearbeitung und präsentiert diese zusammen mit einem Feedback über die Feedback-Komponente 6 beispielsweise über die Ausgabevorrichtung, beispielsweise einen Display auf einem Monitor mit einem Avatar, wieder dem Nutzer. Gleichzeitig hat die Analytik-Komponente 1 die Möglichkeit, Ergebnisse und/oder Feedback abzuspeichern und entsprechend aufgearbeitete und vom Nutzer freigegebene Daten über eine Speicher- und Weiterleitungs-Komponente 7 zentral zur Verfügung zu stellen.

Die Prompt-Komponente 4 speichert die Prompts, die von der Aufgaben-Komponente 2 genutzt werden, um die Aufgaben zu erledigen.

Das lokal implementierte Kl-Modell 3 und/oder die Prompt-Komponente 4 werden genutzt, um die erfassten Daten über das Nutzerverhalten an der GUI zu analysieren.

Im Betrieb wird zunächst die Analytik-Komponente 1 auf dem Client geladen und/oder bereitgestellt. Die Aufgaben-Komponenten 2 nutze die von der Peripheral-Komponente 5 bereitgestellten Informationen. Zusätzlich werden die von den Aufgaben verwendeten Eingabeaufforderungen (Prompts) aus der Prompt-Komponente 4 ausgelesen. Dies wird von der Kl-Modell-Komponente 3 eingesetzt, um die Aufgabe(n) der Aufgaben-Komponente 2 auszuführen. Die Ergebnisse aller Aufgaben werden an die Analytik-Komponente 1 weitergeleitet. Das Feedback wird dem Nutzer über die Feedback-Komponente 6 auf der Ausgabevorrichtung bereitgestellt. Die Analytik-Komponente 1 leitet gegebenenfalls - siehe oben - die Ergebnisse an die Speicher- und Weiterleitungs-Komponente 7 weiter, um die Ergebnisse zentralen Stellen zur Verfügung zu stellen. Die Doppelpfeile zwischen den einzelnen Komponenten 1 bis 7 stellen den Daten- und/oder Informationsfluss dar.

Insbesondere werden durch das in Figur 1 gezeigte Schema auf dem Client Informationen und/oder Daten beispielsweise zu folgenden Punkten erfasst und analysiert:
- zur Benutzerfreundlichkeit: dafür werden Bildschirmaufnahmen oder Screenshots gemacht und durch die lokal implementierte KI des Analysesystems interpretiert und/oder ausgelesen.
- Fehler: Das Analysesystem liest Browserprotokolle, analysiert und fasst aufgetretene Fehler zusammen.
- Zusammenfassung der Kontroll- und/oder Steuerungsstruktur: Bei Browserprogrammen wird z.B. der DOM-Baum des Browsers benutzt und ausgelesen.
- Fenster- und Kontrollhierarchiestrukturen werden auf Basis der installierten nativen Anwendung, da diese direkt auf die Hardwarekomponenten zugreift, erfasst.
- Nutzer-Interaktion dazu werden beispielsweise Nutzereingaben - z.B: Input per Mouse, Keyboard, Mikrophon, Video, Touchscreen erfasst, gesammelt und per KI analysiert.
- Daten zu Steuerelementen werden über Nachverfolgung von Aktivierung und Deaktivierung der Steuerelemente sowie Nutzer-Aktivitäten innerhalb der Steuerelemente erfasst und entsprechen analysierbare Daten erzeugt.

Das Analysesystem hat jeweils Komponenten und rechnergestützte Module, die zu jedem dieser Punkte Daten erfassen, sammeln, speichern, gegebenenfalls transformieren und an die Kl-Modell-Komponente 3 weiterleiten, die diese analysieren und als Ergebnis über die Analyse-Komponente 1 ein Feedback an den Nutzer über die Feedback-Komponente 6 geben.

Lokal auf dem Endgerät laufen die Kl-Modelle in Anwendung auf den lokal durch das Analysesystem erzeugten Daten. Die KI, insbesondere die generative KI, berechnet in Echtzeit aus den erfassten und analysierten Daten ein Modell, wie die optimale GUI für diesen Nutzer aussehen sollte, welche Funktionen dort und wie angeordnet sein sollten und stellt diese dann auf Abruf oder automatisch auf dem Ausgabegerät am Front-End zur Verfügung.

Die Aktivitäten und die Ergebnisse der KI-Bearbeitung der oben genannten Daten und Datensätze sind lokal auf dem Eingabe und Ausgabegerät der Kommunikationsvorrichtung und können unabhängig von einer Verbindung zum Internet erstellt werden.

Durch den lokalen Ablauf des Verfahrens, von der Erhebung der Daten über die Analyse, das Ablaufen der lokal implementierten Kl-Modelle und schließlich das lokale Ausgeben der Optimierung eines GUI ist perfekter Datenschutz für den Nutzer realisiert.

Die Erfindung belastet die Rechnerkapazität des Clients. Die Nutzung der Grafikprozesseinheit GPU kann über Systemtools erkannt werden, genau wie weitere Prozesse der in Figur 1 gezeigten Komponenten, die Datenverkehr verursachen. Durch eine intensive Nutzung der Benutzeroberfläche GUI wird eine hohe CPU-/GPU-Auslastung verursacht, auch wenn nur einfache Aktionen wie Tastatureingabe oder Mausbewegung involviert sind.

Datenströme kann man überwachen und/oder messen, wobei beispielsweise Informationen über Größe von Datenpaketen und/oder Übertragungsraten eine Rolle spielen.

Beispielsweise werden Metriken wie Dateizugriffe, Festplattendurchsatz und/oder Arbeitsspeichernutzung im Client belastet. Schließlich können Datenströme über Sensoren an Festplatten, Netzwerkkarten oder Speichercontrollern gemessen werden.

Sowohl die native als auch browserbasierte Anwendungen können lokal implementierte Lern-/Deep-learning Modelle verwenden. Diese Modelle unterliegen einem bestimmten Standard, wie z.B. onnx, und können im Browser-Cache, in einem Remotesystem oder im lokalen Dateisystem gefunden werden.

Trotzdem können die Daten zur Produkt-Weiterentwicklung genutzt werden, wenn die Daten - nach Freigabe, pseudonymisiert und/oder anonymisiert - weitergeleitet werden. Schließlich ist es so möglich, konkret auf den Nutzer, dessen Fähigkeiten und/oder Vorlieben zurechtgeschnittene Unterstützung durch das Kommunikationsvorrichtung bereit zu stellen. Gleichzeitig ist es möglich, die erhobenen Daten und deren Analyse zur Weiterentwicklung der Produkte zu nutzen.

Die Peripheral-Komponente 5 stellt z.B. die Verbindung zum Internet her, dient aber in der Kommunikationsvorrichtung beispielsweise auch dazu, regelmäßig Informationen darüber zu liefern, was der Nutzer am Bildschirm gerade erfahren kann und was er tatsächlich erkennt und/oder realisiert. Dazu eignen sich beispielsweise Screenshots oder Bildschirmaufnahmen, Bildschirmfreigabe und/oder Systeminformationen, die die Peripheral-Komponente beispielsweis über Browser-APls ausliest.

Nach einer anderen Ausführungsform verwendet die Erfindung entweder Remote-Kl-Modelle anstelle lokal laufender Kl-Modelle oder eine Mischung aus lokalen und remote-Kl-Modellen. Remotemodelle können auch on-premise oder über Cloud-Anbieter gehostet werden. Zwar verlagert das Hosten von Kl-Modellen auf Remoteservern die Rechner-Kapazitäts-Belastung von dem Client weg auf zentrale Stellen, aber es birgt auch das Risiko von verringertem Datenschutz. Deshalb wird, beispielsweise bei der Ausführungsform mit der teilweisen Nutzung von Remote-Kl-Modellen auch zusätzlicher Datenschutz durch Verschlüsselung angewendet.

Unter "remote ausführen" wird vorliegend verstanden, dass eine rechnergestützter Prozess nicht auf dem Client, sondern auf Servern, virtuellen Maschinen oder in der Cloud stattfindet. Dazu ist eine Netzwerkverbindung zwischen dem Client, also dem lokalen Gerät, und dem entfernten System erforderlich. Der Client sendet dann Befehle und/oder Daten an das entfernte System, wie z.B. den Server und empfängt Ergebnisse. Ein erforderlicher Datenschutz kann über die Netzwerkverbindung bereitgestellt werden.

Nach einer beispielhaften Ausführungsform der Erfindung gibt die lokal implementierte KI über das Front-End Feedback an den Nutzer, welche Reaktionen auf den momentan vorliegenden Stand der Bildschirmaufnahme möglich sind und gegebenenfalls auch die Variante, welche Reaktionen die KI nutzerseitig - im Hinblick auf die Aufgabe - für sinnvoll hält. Die Feedback-Informationen sind beispielsweise nach Nutzer-Vorgaben gefiltert.

Nach einer Ausführungsform des Verfahrens erzeugt die lokal implementierte KI kontinuierlich Screenshots und/oder Screenshots in bestimmten zeitlichen Abständen.

Bisher werden zur Erfassung von Informationen über Nutzerverhalten, um Rückschlüsse auf Bedienfreundlichkeit des Systems zu ziehen, hauptsächlich telemetrische Daten auf zentralen Servern analysiert. Die entsprechenden Analytik-Plattformen, die diese Daten verarbeiten, stellen spekulative Hypothesen auf, was auf der Benutzerseite passiert ist, weil sie die Nutzereingaben nicht direkt mit den Bildschirmaufnahmen korrelieren können.

Durch die vorliegende Erfindung wird erstmals eine Technik bereitgestellt, mit der zusätzliche Daten erzeugt werden, die kontextuelle Informationen darüber teilen, was dem Benutzer sichtbar ist und dies in Bezug auf die Umgebung, in der das Produkt oder der Dienst läuft, setzen, ohne dabei die direkten Daten notwendigerweise zu teilen. Vor allem die Korrelation in Echtzeit macht hier den Unterschied im Hinblick auf ein Feedback, das über eine entsprechende Feedback-Komponente aufbereitet und dem Nutzer bereitgestellt wird.

Durch die hier erstmals vorgestellte Technik ist es möglich, spezifische Interaktionsdynamiken zu erfassen, beispielsweise De-Aktivierungen, Scroll in View, Maus-Überfahrungen ohne Aktivierung, unruhige und hilflose Bewegungen.

Nach einer beispielhaften Ausführungsform wird die Analyse-Software dahingehend erweitert, dass Mimik- und/oder Gestenerkennung also der emotionale Zustand des Nutzers auch miterfasst wird und diese Daten ebenfalls analysiert werden.

## Patentansprüche

1. Rechnergestützte Kommunikationsvorrichtung, mit einem Back-End und einem Front-End, wobei das Back-End an zumindest eine Rechnereinheit mit einer Künstlichen Intelligenz (Kl) angeschlossen ist und das Front-End zumindest eine graphische Benutzeroberfläche (GUI) mit Anzeige und Bedienvorrichtung für Eingaben durch den Nutzer und Ausgaben durch die Kommunikationsvorrichtung umfasst, wobei ein Analysesystem vorgesehen ist, das Informationen über das Nutzerverhalten sammelt, verarbeitet und speichert und diese mittels einer lokal implementierten Künstlichen Intelligenz analysiert und mittels Kl-Modellen dem Nutzer ein Feedback gibt.

2. Kommunikationsvorrichtung nach Anspruch 1, bei der die Informationen über das Nutzerverhalten analysiert und in Echtzeit ein Feedback als Ergebnis der KI-Berechnung dem Nutzer bereitgestellt ist.

3. Kommunikationsvorrichtung nach einem der vorhergehenden Ansprüche, bei der die Informationen zumindest zum Teil aus der Analyse von Bildschirmaufnahmen stammen.

4. Kommunikationsvorrichtung nach einem der vorhergehenden Ansprüche, bei der die Informationen zumindest teilweise aus der Analyse von Ton- und/oder Bildaufnahmen des Nutzers bei Eingaben stammen.

5. Kommunikationsvorrichtung nach einem der vorhergehenden Ansprüche, bei der die Informationen zumindest teilweise aus der Analyse von individuellen System-Einstellungen stammen.

6. Kommunikationsvorrichtung nach einem der vorhergehenden Ansprüche, bei der die Informationen zumindest teilweise aus der Analyse der Nachverfolgung von Nutzerinteraktionen stammen.

7. Kommunikationsvorrichtung nach einem der vorhergehenden Ansprüche, bei der die Informationen zumindest teilweise aus der Analyse der Browserprotokolle stammen.

8. Kommunikationsvorrichtung nach einem der vorhergehenden Ansprüche, bei der das Analysesystem eine Peripheral-Komponente umfasst.

9. Kommunikationsvorrichtung nach einem der vorhergehenden Ansprüche, bei der das Analysesystem über eine Peripheral-Komponente Daten und/oder Informationen aus externen Quellen abruft.

10. Kommunikationsvorrichtung nach einem der vorhergehenden Ansprüche, bei der das Analysesystem über eine Peripheral-Komponente durch Auslesen von Browser-APls Systeminformationen abruft.

11. Kommunikationsvorrichtung nach einem der vorhergehenden Ansprüche, bei der das Analysesystem zumindest zum Teil auch remote Kl-Modelle hostet.

12. Kommunikationsvorrichtung nach Anspruch 11, bei der zusätzlicher Datenschutz durch Verschlüsselung bei der Nutzung von remote Kl-Modellen vorgesehen ist.

13. Verfahren zur Analyse von Nutzerverhalten am Front-End einer GUI, folgende Prozessschritte umfassend
- Erfassen der vom Nutzer auszuführenden Aufgabe,
- Sammeln und/oder Erzeugen von Informationen über das Nutzerverhalten am GUI, Erzeugen von rechnergestützt bearbeitbaren Daten und Verarbeitung dieser Daten durch eine lokal am Client implementierte Künstliche Intelligenz (Kl),
- Berechnung einer Analyse als Auslegung der Information durch die Kl-Modelle,
- darauffolgende Ausgabe eines Feedbacks als Ergebnis der Analyse und Verarbeitung der Information durch die lokal implementierte Kl.

14. Verfahren nach Anspruch 13, bei dem kontinuierlich Bildschirmaufnahmen zum Erzeugen von Informationen gemacht werden.

15. Verfahren nach einem der Ansprüche 13 oder 14, bei dem ein Feedback zur Analyse des Nutzerverhaltens in Echtzeit ausgegeben wird.
